Europäisches Patentamt

European Patent Office

Office européen des brevets

(19)

(11) EP 0 834 710 A1

(12) EUROPÄISCHE PATENTANMELDUNG

(43) Veröffentlichungstag:
08.04.1998 Patentblatt 1998/15

(51) Int. Cl.$^6$: F24J 2/00

(21) Anmeldenummer: 97115986.8

(22) Anmeldetag: 13.09.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 06.10.1996 DE 19641008

(71) Anmelder: Norsk Hydro ASA
0257 Oslo 2 (NO)

(72) Erfinder: Schulz, Harald, Dr.
86381 Krumbach (DE)

(74) Vertreter:
Dziewior, Joachim, Dipl.-Phys. Dr.
Ensingerstrasse 21
89073 Ulm (DE)

(54) Aussenwandaufbau für Gebäude, insbesondere Paneel

(57) Der Außenwandaufbau für Gebäude besitzt zur Nutzung von Solarenergie zwischen einer innenseitigen, eine innere Wärmedämmschicht (3) aufweisenden Wandschale (2) und einer für Solarstrahlung durchlässigen, weitgehend transparenten außenseitigen Wandschale (1) eine äußere Wärmedämmschicht (5). Diese Wärmedämmschicht (5) ist durch eine Solarstrahlung absorbierende Grenzfläche (6) begrenzt, wobei die Grenzfläche (6) zwischen der außenseitigen Wandschale (1) und der äußeren Wärmedämmschicht (5) angeordnet und durch Email, Folie oder Lack opak ausgebildet ist.

Fig. 1

EP 0 834 710 A1

**Beschreibung**

Die Erfindung betrifft einen Außenwandaufbau für Gebäude, inbesondere Paneel, wobei zur Nutzung von Solarenergie zwischen einer innenseitigen, eine innere Wärmedämmschicht aufweisenden Wandschale und einer für Solarstrahlung durchlässigen, weitgehend transparenten außenseitigen Wandschale eine äußere Wärmedämmschicht angeordnet ist, die durch eine Solarstrahlung absorbierende Grenzfläche begrenzt ist.

Bei einem aus WO 95/10741 bekannten Wandaufbau dieser Art sind der von der außenseitigen Wandschale gebildete Wärmedurchgangswiderstand und deren Gesamtenergiedurchlaßgrad sowie der von der innenseitigen Wandschale mit ihrer inneren Wärmedämmschicht gebildete Wärmedurchgangswiderstand so aufeinander abgestimmt, daß durch die an der Grenzfläche absorbierte Solarenergie bei der zu erwartenden größtmöglichen Solareinstrahlung und der zu erwartenden maximalen sommerlichen Außentemperatur im Inneren des Wandaufbaus keine die Werkstoffe im Wandaufbau schädigenden hohen Temperaturen und an der Wandinnenoberfläche höchstens Temperaturen entstehen, die von im Rauminneren befindlichen Personen noch als behaglich empfunden werden. Diese Abstimmung erfordert in der Regel eine Anpassung des Wärmedurchgangskoeffizienten k und des Gesamtenergiedurchlaßgrades g der zumeist als Verglasung ausgebildeten transparenten außenseitigen Wandschale, so daß deren k- und g-Werte häufig keinen ausreichenden Spielraum mehr lassen, um durch die Ausbildung der außenseitigen Wandschale das von einem Betrachter von außen wahrgenommene visuelle Erscheinungsbild des Außenwandaufbaus im Wand- und Brüstungsbereich noch nach Wunsch gestalten zu können.

Der Erfindung liegt die erste Teilaufgabe Zugrunde, einen Wandaufbau der eingangs genannten Art so auszubilden, daß das von außen gesehene visuelle Erscheinungsbild des Wandaufbaus auch bei vorgegebener Ausbildung der transparenten außenseitigen Wandschale noch nach Wunsch beeinflußt und bestimmt werden kann. Nach der zweiten Teilaufgabe sollen unter möglichst hoher Solarenergienutzung und Gewährleistung der Behaglichkeit im Rauminneren zu hohe, weil materialzerstörende Temperaturen innerhalb des Wandaufbaus sicher vermieden werden, wobei die Bautiefe des Wandelements möglichst gering, insbesondere nicht größer sein soll, als die statischen Notwendigkeiten der tragenden Konstruktion, insbesondere beispielsweise die Pfosten und Riegel, es erfordern.

Die erste Teilaufgabe wird bei einem Wandaufbau mit den eingangs genannten Merkmalen erfindungsgemäß dadurch gelöst, daß die Grenzfläche zwischen der außenseitigen Wandschale und der äußeren Wärmedämmschicht angeordnet und durch Email, Folie oder Lack opak ausgebildet ist.

Vorteilhaft ist es dabei, wenn die Grenzfläche an ihrer der außenseitigen Wandschale zugewandten und/oder anliegenden Oberfläche eine farbliche und/oder strukturelle Gestaltung aufweist, die das von außen gegen die außenseitige Wandschale gesehene visuelle Erscheinungsbild des Außenwandaufbaus bestimmt.

Die farbliche und/oder strukturelle Gestaltung an der der außenseitigen Wandschale zugekehrten Oberfläche beeinflußt die spektrale Absorption und Reflektion der Solarstrahlung an der Grenzfläche und prägt dadurch in überraschender Weise das von einem Betrachter von außen gegen die außenseitige Wandschale gesehene visuelle Erscheinungsbild des Wandaufbaus, so daß durch eine entsprechende Gestaltung dieser Oberfläche das visuelle Erscheinungsbild weitgehend bestimmt werden kann, ohne an der Ausbildung der außenseitigen Wandschale selbst, insbesondere auch bezüglich ihrer k- und g-Werte, Änderungen vornehmen zu müssen.

Die zweite Teilaufgabe wird bei einem Außenwandaufbau, bei welchem die Grenzfläche einen Bruchteil alpha der Solarstrahlung aus der äußeren Wärmedämmschicht absorbiert, wobei die Summe $R_g$ des von der außenseitigen Wandschale und der äußeren Wärmedämmschicht gebildeten Wärmedurchgangswiderstandes $R_a$ und des von der innenseitigen Wandschale mit ihrer inneren Wärmedämmschicht gebildeten Wärmedurchgangswiderstands $R_i$ einen Mindestwert $R_{gmin}$ besitzt, der so groß ist, daß bei fehlender Sonneneinstrahlung und der zu erwartenden minimalen Außenlufttemperatur (Winter/Nacht) die Temperatur an der Wandinnenoberfläche des Wandaufbaus einen bezüglich Behaglichkeit und Tauwasserrisiko minimalen Wert nicht unterschreitet, mit den im im kennzeichnenden Teil des Anspruches 3 genannten Maßnahmen gelöst. Dort wie im folgenden bedeuten die Wärmedurchgangswiderstände $R_a$, $R_i$ jeweils die Summe aus dem Wärmedurchlaßwiderstand $1/\text{Lambda}_a$ bzw. $1/\text{Lambda}_i$ des Wandaufbaus zwischen der Grenzfläche und der Wandaußenseite bzw. Wandinnenseite und dem Wärmeübergangswiderstand $1/\text{alpha}_a$ an der Wandaußenseite bzw. $1/\text{alpha}_i$ an der Wandinnenseite. Entsprechend bedeutet der Wärmedurchgangswiderstand

$$R_g = R_a + R_i = 1/\text{alpha}_a + 1/\text{Lambda}_a + 1/\text{Lambda}_i$$

$+ 1/\text{alpha}_i$ die Summe des Wärmedurchlaßwiderstandes $1/\text{Lambda}_a + 1/\text{Lambda}_i$ des gesamten Wandaufbaus und der inneren bzw. äußeren Wärmeübergangswiderstände $1/\text{alpha}_a$, $1/\text{alpha}_i$.

Bei dem erfindungsgemäßen Wandaufbau erfolgt die Absorption der einfallenden Sonnenstrahlung im wesentlichen in der die transparente äußere Wärmedämmschicht zur Seite der inneren Wärmedämmschicht hin begrenzenden Grenzfläche, an der somit bei Sonneneinstrahlung in der Regel die höchsten Temperaturen innerhalb des Wandaufbaus auftreten. Die Grenzfläche kann dabei sehr dünn, etwa eine Folie, ein Film oder eine Beschichtung sein, wenn sie nur für die Solarstrahlung weitgehend undurchlässig ist. Die erfindungsgemäße Abstimmung der im Anspruchskennzeichen genannten Größen kann durch einen gewollt verringerten Wert des Gesamtenergiedurchlaßgrades g der außenseitigen Wandschale und/oder des Absorptionsgrades alpha an der Grenzfläche eine geringere Aufnahme an Solarenergie im Wandaufbau zur Folge haben, gewährleistet aber bei gleichwohl guter Nutzung der Solarenergie, daß auch bei höchstmöglicher Sonneneinstrahlung der maximale Temperaturwert $T_{tmax}$ im Wandaufbau nicht überschritten wird, so daß Materialzerstörungen nicht auftreten können. Gleichzeitig kann durch diese erfindungsgemäße Abstimmung überraschenderweise aber außerdem erreicht werden, daß die Temperatur an der Wandinnenoberfläche nicht größer als der Wert $T_{oimax}$ werden kann, so daß diese Temperatur und der an der Wandinnenseite zur Rauminnenluft hin auftretende, durch den Wärmeübergangswiderstand $1/alpha_i$ bedingte Temperatursprung auch bei maximaler Sonneneinstrahlung in Bereichen liegen, die von im Rauminneren sich aufhaltenden Personen noch als behaglich empfunden werden. Die im Rahmen dieser Abstimmung erforderlichen Werte des Wärmedurchgangswiderstandes $R_i$ der innenseitigen Wandschale mit ihrer inneren Wärmedämmschicht sind unschwer durch Schichtdicken erreichbar, welche die Bautiefe und den konstruktiven und kostenmäßigen Aufwand des erfindungsgemäßen Wandaufbaus insgesamt nicht über das vergrößern müssen, was für den Wert $R_{gmin}$ des Wärmedurchgangswiderstandes des gesamten Wandaufbaus ohnehin erforderlich ist, damit auch des Nachts und bei minimaler Außentemperatur eine ausreichende Wärmedämmung besteht, also die Temperatur an der Wandinnenfläche den bezüglich Behaglichkeit und Tauwasserrisiko minimalen Wert nicht unterschreitet. - Die im Rahmen der erfindungsgemäßen Größenabstimmung bestehende Möglichkeit, den g-Wert der außenseitigen Wandschale und äußeren Wärmedämmschicht bewußt zu verringern, kann in Verbindung mit der absorbierenden Grenzfläche im übrigen dazu genutzt werden, das äußere Erscheinungsbild des Wandaufbaus zu optimieren, worin ein weiterer wichtiger Vorteil der Erfindung zu sehen ist. Die reduzierten g-Werte verringern nämlich die Durchsicht durch die außenseitige Wandschale, erschweren also die Einsicht von außen in den hinter der außenseitigen Wandschale befindlichen Wandaufbau, wodurch Anforderungen an die Ästhetik des Erscheinungsbildes des Wandaufbaus leichter erfüllt werden können.

Um die genannten Forderungen (Einhalten bestimmter Grenzen für die maximal auftretende Temperatur im Wandaufbau und die maximal auftretende Innenoberflächentemperatur) einhalten zu können, muß mit steigendem Wärmedurchgangswiderstand $R_a$ der äußeren Wandschale und der äußeren Wärmedämmschicht der Anteil der an der Grenzfläche aufgenommenen Solarenergie durch Reduzierung des g-Wertes und/oder der Absorption an der Grenzfläche verringert werden. Die Reduzierung von g und/oder alpha ermöglicht gleichzeitig bei gegebenem $R_a$ eine zunehmende Erweiterung des zulässigen Bereichs für den Wärmedurchgangswiderstand $R_i$ der inneren Wandschale nach unten und nach oben.

Im einzelnen ist die erfindungsgemäße Größenabstimmung durch die im Anspruch 3 enthaltene Tabelle 1 gekennzeichnet. Ausführungen des Wandaufbaus, die sich dabei durch eine besonders gute Solarenergienutzung auszeichnen, sind durch den Anspruch 4 und die in ihm enthaltene Tabelle 2 gekennzeichnet. Diese Tabellen gelten unter den Voraussetzungen $T_{max} = 120°C$, $T_{oimax} = 36°C$, $T_{amax} = 30°C$, $T_i = 20°C$, wobei $T_{amax}$ die höchste zu erwartende sommerliche Außentemperatur und $T_i$ die Innentemperatur bedeuten, und für eine Süd/West-Orientierung des Wandaufbaus mit einer zu erwartenden maximalen Solareinstrahlung von $q_{smax} = 700$ W/m$^2$. In der Tabelle 1 sind für alpha gleich 0,2; 0,4; 0,6 und 0,8 jeweils in Abhängigkeit von $R_a$ (erste Spalte) und alpha*g (zweite Spalte) der zulässige Maximalwert (dritte Spalte) und Minimalwert (vierte Spalte) für $R_i$ zusammengestellt. Zwischenwerte können durch Interpolationen ohne weiteres ermittelt werden. In der Tabelle 2 ist für ausgesuchte und bsonders bevorzugte Fälle außer den jeweiligen $R_a$-, alpha-, g- und $R_i$-Werten in der letzten Spalte die Eignung für die Nutzung der Solarenergie in drei Stufen +, ++ und +++ gekennzeichnet, wobei der Nutzungsgrad mit der Anzahl der Plus-Zeichen zunimmt.

Die Werte von $R_a$, $R_i$, alpha und g gemäß der Tabellen 1 und 2 hängen natürlich vom Wert $q_{smax}$ der zu erwartenden höchstmöglichen Sonneneinstrahlung ab. Dieser Wert ist je nach der Orientierung des Wandaufbaus nach den Himmelsrichtungen verschieden; bei Orientierung nach Süden ist er am größten, bei Orientierung nach Norden am kleinsten. Die Erfindung empfiehlt, diese Richtungsabhängigkeit gemäß Anspruch 5 auszunützen, also bei der Größenabstimmung für einen bespielsweise nach Norden gerichteten Wandaufbau den dafür wesentlich kleineren Wert $q_{smax}$ als für Südrichtung zu berücksichtigen, um auf diese Weise erheblich kleinere k- und $k_{eq}$- Werte für den Wandaufbau zu ermöglichen, als sich bei Verwendung des $q_{smax}$-Wertes für Südrichtung ergeben würden.

Die im Rahmen der Erfindung durch eine absichtliche Verringerung des Wertes für alpha*g (hier wie im folgenden bedeutet * das Multipikationszeichen) der außenseitigen Wandschale weniger aufgenommene Solarstrahlung wird durch die Anpassung des Wärmedurchgangskoeffizienten k = $1/R_a$ dieser Wandschalung optimal genutzt, indem der entsprechend verringerte k-Wert den Wärmeverlust von der absorbierenden Grenzfläche nach außen durch die äußere transparente Wärmedämmschicht und die außenseitige Wandschale hindurch begrenzt.

In weiter bevorzugten Ausführungsformen kann die farbliche und/oder strukturelle Gestaltung durch eine Beschichtung oder durch eine Oberflächenveredelung der Grenzfläche gebildet sein. Eine besonders bevorzugte Ausführungsform ist dadurch gekennzeichnet, daß die Grenzfläche auf ihrer der äußeren Wärmedämmschicht zugekehrten Oberfläche ein im wesentlichen flächenhaftes Gebilde als Träger der farblichen und/oder strukturellen Gestaltung aufweist. Die farbliche Gestaltung kann von monochromen oder polychromen Farbfeldern, die strukturelle Gestaltung durch eine reliefartig geformte Oberfläche gebildet sein.

Schließlich kann im Rahmen der Erfindung die außenseitige Wandschale von einlagigem Glas oder von mehrschichtigem Isolierglas unterschiedlichen Aufbaus gebildet sein.

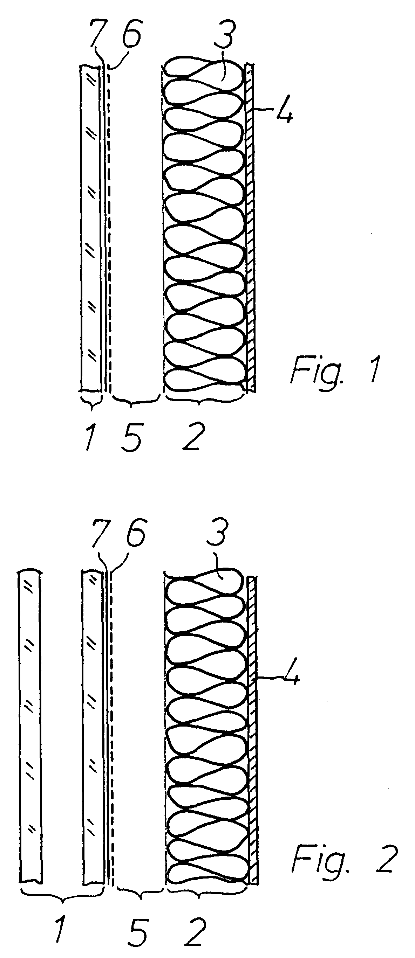

Im folgenden wird ein Ausführungsbeispiel der Erfindung anhand der Zeichnung näher erläutert; die beiden Figuren 1 und 2 zeigen einen Querschnitt durch den Wandaufbau eines erfindungsgemäßen Wandpaneels in lediglich schematischer Darstellung, wobei die außenseitige Wandschale in Fig. 1 aus einlagigem Glas und in Fig. 2 aus Isolierglas besteht.

Diese außenseitige Wandschale ist in der Zeichnung mit 1 bezeichnet und kann sehr unterschiedlich, insbesondere als Einfach-, Zweifach- oder auch Dreifachglasscheibe ausgebildet sein, wobei im übrigen Wärmeschutz- und/oder Sonnenschutzbeschichtungen sowie den g-Wert beeinflussende Beschichtungen vorhanden sein können, die aber hier im einzelnen nicht weiter beschrieben zu werden brauchen. Zu dem in der Zeichnung auf der rechten Seite liegenden Innenraum hin besitzt das Paneel eine innenseitige Wandschale 2, zu der eine innere Wärmedämmschicht 3 gehört, die auf der Innenraumseite durch eine weitgehend dampfdichte Wandschicht 4, beispielsweise ein Blech, abgeschlossen sein kann. An die außenseitige Wandschale 1 schließt sich in Richtung zum Innenraum hin eine äußere Wärmedämmschicht 5 an, die wie die außenseitige Wandschale 1 für die Solarstrahlung durchlässig sein kann und zumeist von einer Luftschicht gebildet ist, aber auch transparente Gläser, transparente Kunststoffe, transparente Kapillarplatten usw. enthalten kann. Die außenseitige Wandschale (1) ist von der äußeren Wärmedämmschicht 5 durch eine Grenzfläche 6 getrennt, die aus Email, einer Folie, Lack oder dergl. bestehen kann und an der Solarstrahlung absorbiert wird.

Um den visuellen Eindruck, den ein Betrachter wahrnimmt, der von außen, in der Zeichnung also von links her, gegen die außenseitige Wandschale 1 blickt, nach Wunsch zu beeinflussen und zu bestimmen, kann die Grenzfläche 6 an ihrer der außenseitigen Wandschale 1 zugekehrten Oberfläche mit einer farblichen und/oder strukturellen Gestaltung versehen, welche die spektrale Absorption und Reflektion der Solarstrahlung an der Grenzfläche 6 so beeinflußt, daß im Ergebnis der gewünschte visuelle Eindruck des Außenwandelementes in der Ansicht von außen entsteht. Im einzelnen kann diese farbliche und/oder strukturelle Gestaltung durch eine zusätzliche Beschichtung oder durch eine Oberflächenveredelung der Grenzfläche 6 gebildet sein. Die Grenzfläche 6 kann auch auf ihrer der außenseitigen Wandschale 1 zugekehrten Oberfläche mit einem im wesentlichen flächenhaften Gebilde 7 als Träger der farblichen und/oder strukturellen Gestaltung versehen sein. Die farbliche Gestaltung kann von Farbfeldern oder -bereichen gebildet sein, die unterschiedliche Farben besitzen. Sie kann aber auch aus einer monochromen, sich über die gesamte Paneelfläche erstreckenden Färbung gebildet sein. Die strukturelle Gestaltung kann z. B. durch eine reliefartige Ausformung der Oberfläche des Trägers 7 erreicht werden.

Im Rahmen der Erfindung empfehlen sich zur jeweils optimalen Anpassung des k-Wertes und des g-Wertes an die jeweils bestehenden Erfordernisse, nämlich hinsichtlich der an der absorbierenden Grenzfläche 6 und an der Wandinnenoberfläche auftretenden Maximaltemperaturen $T_{tmax}$ und $T_{oimax}$ zweckmäßig die an Hand der Tabellen ableitbaren Kombinationen.

Die zulässigen Zuordnungen von $R_a$, alpha, g und $R_i$ für süd- und westorientierte Wandflächen sind in den Tabellen 1 und 2 in der schon früher erläuterten Weise zusammengestellt. Zwischen den zu gegebenem alpha, $R_a$ und g jeweils angegebenen beiden Grenzwerten kann $R_i$ frei gewählt werden. Die von Fall zu Fall erreichbare Nutzung der Solarenergie ist in der letzten Spalte von Tabelle 2 bewertet, wobei die Bewertung auf folgender Grundlage mit $k_{statisch} = 1/R_g$ beruht:

Maßstab ist jeweils eine südorientierte Wand

$$x = \text{gut } (k_{equ} = 0{,}16 - 0{,}25 \text{ W/m}^2\text{K}, \; k_{equ} \leq 1/2 \, k_{statisch})$$

$$xx = \text{sehr gut } (k_{equ} = 0{,}06 - 0{,}15 \text{ W/m}^2\text{K}, \; k_{equ} \leq 1/3 \, k_{statisch})$$

$$xxx = \text{hervorragend } (k_{equ} \leq 0{,}05 \text{ W/m}^2\text{K}, \; k_{equ} \leq 1/8 \, k_{statisch})$$

**Patentansprüche**

1. Außenwandaufbau für Gebäude, inbesondere Paneel, wobei zur Nutzung von Solarenergie zwischen einer innenseitigen, eine innere Wärmedämmschicht (3) aufweisenden Wandschale (2) und einer für Solarstrahlung durchlässigen, weitgehend transparenten außenseitigen Wandschale (1) eine äußere Wärmedämmschicht (5) angeordnet ist, die durch eine Solarstrahlung absorbierende Grenzfläche (6) begrenzt ist, dadurch gekennzeichnet, daß die Grenzfläche (6) zwischen der außenseitigen Wandschale (1) und der äußeren Wärmedämmschicht (5) angeordnet und durch Email, Folie oder Lack opak ausgebildet ist.

2. Außenwandaufbau nach Anspruch 1, dadurch gekennzeichnet, daß die Grenzfläche (6) an ihrer der außenseitigen Wandschale (1) zugewandten und/oder anliegenden Oberfläche eine farbliche und/oder strukturelle Gestaltung aufweist, die das von außen gegen die außenseitige Wandschale (1) gesehene visuelle Erscheinungsbild des Außenwandaufbaus bestimmt.

3. Außenwandaufbau nach Anspruch 1 oder 2, bei dem die Grenzfläche (6) einen Bruchteil alpha der Solarstrahlung aus der äußeren Wärmedämmschicht (5) absorbiert, wobei die Summe $R_g$ des von der außenseitigen Wandschale (1) und der äußeren Wärmedämmschicht (5) gebildeten Wärmedurchgangswiderstandes $R_a$ und des von der innenseitigen Wandschale (2) mit ihrer inneren Wärmedämmschicht (3) gebildeten Wärmedurchgangswiderstands $R_i$ einen Mindestwert $R_{gmin}$ besitzt, der so groß ist, daß bei fehlender Sonneneinstrahlung und der zu erwartenden minimalen Außenlufttemperatur (Winter/Nacht) die Temperatur an der Wandinnenoberfläche des Wandaufbaus einen bezüglich Behaglichkeit und Tauwasserrisiko minimalen Wert nicht unterschreitet, dadurch gekennzeichnet, daß der von der außenseitigen Wandschale (1) und der äußeren Wärmedämmschicht (5) gebildete Wärmedurchgangswiderstand $R_a$ und deren Gesamtenergiedurchlaßgrad g, ferner der Absorptionsgrad alpha an der Grenzfläche (6) und der von der innenseitigen Wandschale (2) mit ihrer inneren Wärmedämmschicht (3) gebildete Wärmedurchgangswiderstand $R_i$ so aufeinander abgestimmt sind, daß bei der am Einbauort zu erwartenden größtmöglichen Solareinstrahlung $q_{smax}$ und der zu erwartenden maximalen sommerlichen Außentemperatur $T_{amax}$ sowohl im Inneren des Wandaufbaus, insbesondere an der Grenzfläche (6), höchstens eine Maximaltemperatur $T_{tmax}$ entsteht, die von den Werkstoffen im Wandaufbau noch ohne Schädigung ertragen wird, als auch an der Wandinnenoberfläche höchstens eine maximale Temperatur $T_{oimax}$ entsteht, die von im Rauminneren befindlichen Personen noch als behaglich empfunden wird, wozu bei gegebenen Werten von $R_a$, alpha und alpha*g (* bedeutet hier wie im folgenden das Multiplikationszeichen) eines nach Süden oder Westen orientierten Wandaufbaus die Werte von $R_i$ zwischen den aus nachstehender Tabelle (Tabelle 1) zu entnehmenden Grenzen liegen:

Tabelle 1

**Solarpaneel: Zulässige Aufbauten**    alpha = 0,2
Grenzkriterium:    T_t kl.gl. 120 °C    T_ol kl.gl. 36 °C
(kl.gl. = kleiner gleich)

| $R\_a$ (m²K)/W | $a \times g$ | $R\_l\_zul$ (m²K)/W Max | Min | $R\_a$ (m²K)/W | $a \times g$ | $R\_l\_zul$ (m²K)/W Max | Min |
|---|---|---|---|---|---|---|---|
| 0,23 | 0,18 | 3,00 | 0,13 | 0,60 | 0,11 | 3,00 | 0,40 |
| 0,23 | 0,16 | 3,00 | 0,13 | 0,60 | 0,10 | 3,00 | 0,40 |
| 0,23 | 0,14 | 3,00 | 0,13 | 0,60 | 0,09 | 3,00 | 0,35 |
| 0,23 | 0,12 | 3,00 | 0,13 | 0,60 | 0,08 | 3,00 | 0,31 |
| 0,23 | 0,10 | 3,00 | 0,13 | 0,60 | 0,07 | 3,00 | 0,23 |
| 0,23 | 0,08 | 3,00 | 0,13 | 0,72 | 0,14 | 1,78 | 0,61 |
| 0,23 | 0,06 | 3,00 | 0,13 | 0,72 | 0,12 | 2,14 | 0,61 |
| 0,40 | 0,16 | 3,00 | 0,20 | 0,72 | 0,10 | 3,00 | 0,53 |
| 0,40 | 0,14 | 3,00 | 0,19 | 0,72 | 0,08 | 3,00 | 0,39 |
| 0,40 | 0,12 | 3,00 | 0,16 | 0,72 | 0,06 | 3,00 | 0,28 |
| 0,40 | 0,10 | 3,00 | 0,13 | 0,72 | 0,04 | 3,00 | 0,13 |
| 0,40 | 0,08 | 3,00 | 0,13 | 0,82 | 0,14 | 1,68 | 0,51 |
| 0,40 | 0,06 | 3,00 | 0,13 | 0,82 | 0,12 | 2,04 | 0,51 |
| 0,40 | 0,04 | 3,00 | 0,13 | 0,82 | 0,10 | 2,51 | 0,43 |
| 0,41 | 0,15 | 3,00 | 0,13 | 0,82 | 0,08 | 3,00 | 0,36 |
| 0,41 | 0,12 | 3,00 | 0,13 | 0,82 | 0,06 | 3,00 | 0,23 |
| 0,41 | 0,10 | 3,00 | 0,13 | 0,82 | 0,04 | 3,00 | 0,13 |
| 0,41 | 0,08 | 3,00 | 0,13 | 0,97 | 0,09 | 1,03 | 0,85 |
| 0,41 | 0,06 | 3,00 | 0,13 | 0,97 | 0,08 | 1,53 | 0,57 |
| 0,53 | 0,14 | 3,00 | 0,24 | 0,97 | 0,06 | 3,00 | 0,28 |
| 0,53 | 0,12 | 3,00 | 0,24 | 0,97 | 0,04 | 3,00 | 0,13 |
| 0,53 | 0,10 | 3,00 | 0,21 | 0,97 | 0,02 | 3,00 | 0,13 |
| 0,53 | 0,08 | 3,00 | 0,16 | | | | |
| 0,53 | 0,06 | 3,00 | 0,13 | | | | |
| 0,53 | 0,04 | 3,00 | 0,13 | | | | |

Tabelle 1

Solarpaneel: Zulässige Aufbauten    alpha =    0,4

Grenzkriterium:    T_t kl.gl.  120 °C    T_ol kl.gl. 36 °C

(kl.gl. = kleiner gleich)

| R_a (m²K)/W | a x g | R_l,zul (m²K)/W | | R_a (m²K)/W | a x g | R_l,zul (m²K)/W | |
|---|---|---|---|---|---|---|---|
| | | Max | Min | | | Max | Min |
| 0,23 | 0,35 | 3,00 | 0,28 | 0,60 | 0,23 | 1,90 | 0,65 |
| 0,23 | 0,33 | 3,00 | 0,27 | 0,60 | 0,20 | 2,40 | 0,60 |
| 0,23 | 0,28 | 3,00 | 0,26 | 0,60 | 0,18 | 2,73 | 0,51 |
| 0,23 | 0,24 | 3,00 | 0,22 | 0,60 | 0,16 | 2,73 | 0,45 |
| 0,23 | 0,20 | 3,00 | 0,20 | 0,60 | 0,13 | 3,00 | 0,35 |
| 0,23 | 0,16 | 3,00 | 0,14 | 0,72 | 0,28 | 0,95 | 0,87 |
| 0,23 | 0,12 | 3,00 | 0,13 | 0,72 | 0,24 | 1,10 | 0,61 |
| 0,40 | 0,32 | 3,00 | 0,43 | 0,72 | 0,20 | 1,50 | 0,53 |
| 0,40 | 0,28 | 3,00 | 0,40 | 0,72 | 0,16 | 2,14 | 0,46 |
| 0,40 | 0,24 | 3,00 | 0,34 | 0,72 | 0,12 | 3,00 | 0,33 |
| 0,40 | 0,20 | 3,00 | 0,29 | 0,72 | 0,08 | 3,00 | 0,13 |
| 0,40 | 0,16 | 3,00 | 0,23 | 0,82 | 0,28 | 0,85 | 0,77 |
| 0,40 | 0,12 | 3,00 | 0,13 | 0,82 | 0,24 | 1,00 | 0,72 |
| 0,40 | 0,08 | 3,00 | 0,13 | 0,82 | 0,20 | 1,40 | 0,51 |
| 0,41 | 0,29 | 3,00 | 0,42 | 0,82 | 0,16 | 2,51 | 0,43 |
| 0,41 | 0,24 | 3,00 | 0,33 | 0,82 | 0,12 | 3,00 | 0,23 |
| 0,41 | 0,20 | 3,00 | 0,28 | 0,82 | 0,08 | 3,00 | 0,13 |
| 0,41 | 0,16 | 3,00 | 0,20 | 0,97 | 0,19 | nicht mgl. | |
| 0,41 | 0,12 | 3,00 | 0,13 | 0,97 | 0,16 | 1,25 | 0,57 |
| 0,53 | 0,28 | 2,80 | 0,50 | 0,97 | 0,12 | 2,36 | 0,46 |
| 0,53 | 0,24 | 3,00 | 0,47 | 0,97 | 0,08 | 3,00 | 0,13 |
| 0,53 | 0,20 | 3,00 | 0,38 | 0,97 | 0,04 | 3,00 | 0,13 |
| 0,53 | 0,16 | 3,00 | 0,30 | | | | |
| 0,53 | 0,12 | 3,00 | 0,18 | | | | |
| 0,53 | 0,08 | 3,00 | 0,13 | | | | |

Tabelle 1

**Solarpaneel: Zulässige Aufbauten**   alpha =     0,6

Grenzkriterium:    T_t kl.gl.  120 °C   T_ol kl.gl. 36 °C

               (kl.gl. = kleiner gleich)

| $R\_a$ ($m^2K$)/W | $a \times g$ | $R\_i\,zul$ ($m^2K$)/W Max | Min | $R\_a$ ($m^2K$)/W | $a \times g$ | $R\_i\,zul$ ($m^2K$)/W Max | Min |
|---|---|---|---|---|---|---|---|
| 0,23 | 0,53 | 3,00 | 0,44 | 0,60 | 0,34 | 1,07 | 0,73 |
| 0,23 | 0,49 | 3,00 | 0,42 | 0,60 | 0,30 | 1,15 | 0,70 |
| 0,23 | 0,42 | 3,00 | 0,40 | 0,60 | 0,27 | 1,90 | 0,62 |
| 0,23 | 0,36 | 3,00 | 0,33 | 0,60 | 0,24 | 2,73 | 0,51 |
| 0,23 | 0,30 | 3,00 | 0,30 | 0,60 | 0,20 | 3,00 | 0,40 |
| 0,23 | 0,24 | 3,00 | 0,19 | 0,72 | 0,42 | nicht mgl. | |
| 0,23 | 0,18 | 3,00 | 0,13 | 0,72 | 0,36 | nicht mgl. | |
| 0,40 | 0,48 | 2,46 | 0,65 | 0,72 | 0,30 | 1,10 | 0,71 |
| 0,40 | 0,42 | 3,00 | 0,60 | 0,72 | 0,24 | 2,14 | 0,61 |
| 0,40 | 0,36 | 3,00 | 0,51 | 0,72 | 0,18 | 3,00 | 0,39 |
| 0,40 | 0,30 | 3,00 | 0,43 | 0,72 | 0,12 | 3,00 | 0,13 |
| 0,40 | 0,24 | 3,00 | 0,31 | 0,82 | 0,42 | nicht mgl. | |
| 0,40 | 0,18 | 3,00 | 0,19 | 0,82 | 0,36 | nicht mgl. | |
| 0,40 | 0,42 | 3,00 | 0,09 | 0,82 | 0,30 | 1,00 | 0,72 |
| 0,41 | 0,44 | 2,92 | 0,64 | 0,82 | 0,24 | 1,68 | 0,61 |
| 0,41 | 0,36 | 3,00 | 0,54 | 0,82 | 0,18 | 3,00 | 0,29 |
| 0,41 | 0,30 | 3,00 | 0,42 | 0,82 | 0,12 | 3,00 | 0,13 |
| 0,41 | 0,24 | 3,00 | 0,36 | 0,97 | 0,28 | nicht mgl. | |
| 0,41 | 0,18 | 3,00 | 0,20 | 0,97 | 0,24 | 1,25 | 0,95 |
| 0,53 | 0,42 | 1,47 | 0,72 | 0,97 | 0,18 | 1,66 | 0,57 |
| 0,53 | 0,36 | 2,33 | 0,65 | 0,97 | 0,12 | 3,00 | 0,13 |
| 0,53 | 0,30 | 2,80 | 0,52 | 0,97 | 0,06 | 3,00 | 0,13 |
| 0,53 | 0,24 | 3,00 | 0,38 | | | | |
| 0,53 | 0,18 | 3,00 | 0,24 | | | | |
| 0,53 | 0,12 | 3,00 | 0,13 | | | | |

Tabelle 1

Solarpaneel: Zulässige Aufbauten     alpha =      0,8

Grenzkriterium:     T_t kl.gl.   120 °C     T_ol kl.gl. 36 °C

(kl.gl. = kleiner gleich)

| R_a (m²K)/W | a x g | R_l zul (m²K)/W Max | Min | R_a (m²K)/W | a x g | R_l zul (m²K)/W Max | Min |
|---|---|---|---|---|---|---|---|
| 0,23 | 0,70 | 3,00 | 0,54 | 0,60 | 0,46 | nicht mgl. | |
| 0,23 | 0,66 | 3,00 | 0,51 | 0,60 | 0,40 | 0,83 | 0,73 |
| 0,23 | 0,56 | 3,00 | 0,44 | 0,60 | 0,36 | 1,62 | 0,65 |
| 0,23 | 0,48 | 3,00 | 0,40 | 0,60 | 0,32 | 2,26 | 0,58 |
| 0,23 | 0,40 | 3,00 | 0,33 | 0,60 | 0,26 | 2,73 | 0,40 |
| 0,23 | 0,32 | 3,00 | 0,25 | 0,72 | 0,56 | nicht mgl. | |
| 0,23 | 0,24 | 3,00 | 0,19 | 0,72 | 0,48 | nicht mgl. | |
| 0,40 | 0,64 | 1,27 | 0,78 | 0,72 | 0,40 | 0,95 | 0,82 |
| 0,40 | 0,48 | 2,10 | 0,71 | 0,72 | 0,32 | 1,78 | 0,61 |
| 0,40 | 0,40 | 3,00 | 0,60 | 0,72 | 0,24 | 3,00 | 0,39 |
| 0,40 | 0,32 | 3,00 | 0,51 | 0,72 | 0,16 | 3,00 | 0,13 |
| 0,40 | 0,24 | 3,00 | 0,37 | 0,82 | 0,56 | nicht mgl. | |
| 0,40 | 0,24 | 3,00 | 0,27 | 0,82 | 0,48 | nicht mgl. | |
| 0,40 | 0,16 | 3,00 | 0,13 | 0,82 | 0,40 | 0,85 | 0,72 |
| 0,41 | 0,58 | 1,26 | 0,77 | 0,82 | 0,32 | 1,68 | 0,51 |
| 0,41 | 0,48 | 2,92 | 0,64 | 0,82 | 0,24 | 3,00 | 0,36 |
| 0,41 | 0,40 | 3,00 | 0,50 | 0,82 | 0,16 | 3,00 | 0,13 |
| 0,41 | 0,32 | 3,00 | 0,39 | 0,97 | 0,38 | nicht mgl. | |
| 0,41 | 0,24 | 3,00 | 0,22 | 0,97 | 0,29 | nicht mgl. | |
| 0,53 | 0,56 | nicht mgl. | | 0,97 | 0,26 | | 0,95 |
| 0,53 | 0,48 | 0,80 | 0,72 | 0,97 | 0,24 | 1,53 | 0,46 |
| 0,53 | 0,40 | 2,80 | 0,58 | 0,97 | 0,16 | 3,00 | 0,13 |
| 0,53 | 0,32 | 3,00 | 0,47 | 0,97 | 0,08 | 3,00 | 0,13 |
| 0,53 | 0,24 | 3,00 | 0,30 | | | | |
| 0,53 | 0,16 | 3,00 | 0,13 | | | | |

wobei in der Tabelle für alpha gleich 0,2; 0,4; 0,6 und 0,8 jeweils in Abhängigkeit von $R_a$ (erste Spalte) und alpha*g (zweite Spalte) der zulässige Maximalwert (dritte Spalte) und Minimalwert (vierte Spalte) für $R_i$ zusammengestellt sind und Zwischenwerte durch Interpolationen ohne weiteres ermittelt werden können.

4. Außenwandaufbau nach Anspruch 3, dadurch gekennzeichnet, daß der Wandaufbau in der nachstehenden Tabelle (Tabelle 2) aufgeführten Werte von alpha*g und $R_a$ sowie einen $R_i$-Wert besitzt, der in dem jeweils zu diesen Werten von alpha*g und $R_a$ gehörenden, in der Tabelle 2 angegebenen $R_i$-Bereich liegt:

Tabelle 2

| $R_a$ (m²K)/W | Absorpt. a | g-Wert g | $R_i$ (m²K)/W Max | Min/E. | Bewertung |
|---|---|---|---|---|---|
| 0,23 | 0,80 | 0,88 | 1,85 | 1,29 | x |
| 0,23 | 0,80 | 0,82 | 1,85 | 1,29 | x |
| 0,23 | 0,80 | 0,70 | | 1,85 | x |
| 0,40 | 0,80 | 0,80 | 1,27 | 0,78 | xx |
| 0,40 | 0,60 | 0,80 | | 1,87 | xx |
| 0,40 | 0,60 | 0,80 | 1,27 | 0,71 | x |
| 0,40 | 0,40 | 0,80 | 1,87 | 1,27 | x |
| 0,40 | 0,80 | 0,70 | 1,87 | 1,27 | xx |
| 0,40 | 0,80 | 0,70 | | 0,70 | x |
| 0,40 | 0,60 | 0,70 | 1,87 | 1,27 | x |
| 0,40 | 0,40 | 0,70 | | 1,87 | x |
| 0,40 | 0,80 | 0,60 | | 1,87 | xx |
| 0,40 | 0,80 | 0,60 | 1,27 | 0,70 | x |
| 0,40 | 0,60 | 0,60 | 1,87 | 1,27 | x |
| 0,40 | 0,40 | 0,60 | | 1,87 | x |
| 0,40 | 0,80 | 0,50 | 1,87 | 1,27 | x |
| 0,40 | 0,60 | 0,50 | | 1,87 | x |
| 0,40 | 0,80 | 0,40 | | 1,87 | x |
| 0,41 | 0,60 | 0,60 | 1,92 | 1,31 | x |
| 0,41 | 0,40 | 0,60 | | 1,92 | x |
| 0,41 | 0,80 | 0,50 | 1,92 | | xx |
| 0,41 | 0,80 | 0,50 | | 1,31 | x |
| 0,41 | 0,60 | 0,50 | 1,92 | 1,31 | x |
| 0,41 | 0,80 | 0,40 | | 1,92 | x |
| 0,41 | 0,60 | 0,40 | | 1,92 | x |
| 0,53 | 0,60 | 0,70 | 1,85 | 0,72 | xx |
| 0,53 | 0,40 | 0,70 | | 1,85 | xx |
| 0,53 | 0,40 | 0,70 | | 1,26 | x |
| 0,53 | 0,20 | 0,70 | | 1,85 | x |
| 0,53 | 0,80 | 0,60 | | 0,72 | xxx |
| 0,53 | 0,60 | 0,60 | 1,85 | 1,26 | xx |
| 0,53 | 0,40 | 0,60 | 1,85 | 1,26 | x |
| 0,53 | 0,20 | 0,60 | | 1,85 | x |
| 0,53 | 0,80 | 0,50 | 1,85 | 1,26 | xx |
| 0,53 | 0,80 | 0,50 | | 0,69 | x |
| 0,53 | 0,60 | 0,50 | | 1,85 | xx |
| 0,53 | 0,60 | 0,50 | 1,26 | 0,69 | x |
| 0,53 | 0,40 | 0,50 | 1,85 | 1,26 | x |
| 0,53 | 0,20 | 0,50 | | 1,85 | x |
| 0,53 | 0,80 | 0,40 | 1,85 | 1,26 | x |
| 0,53 | 0,60 | 0,40 | 1,85 | 1,26 | x |
| 0,53 | 0,40 | 0,40 | | 1,85 | x |
| 0,53 | 0,80 | 0,30 | | 1,85 | x |

| $R_a$ (m²K)/W | Absorpt. a | g-Wert g | $R_i$ (m²K)/W Max | Min/E. | Bewertung |
|---|---|---|---|---|---|
| 0,60 | 0,60 | 0,57 | | 0,72 | xxx |
| 0,60 | 0,40 | 0,57 | 1,84 | 0,72 | xx |
| 0,60 | 0,40 | 0,57 | | 0,41 | x |
| 0,60 | 0,20 | 0,57 | | 1,84 | xx |
| 0,60 | 0,20 | 0,57 | 1,29 | 0,72 | x |
| 0,60 | 0,60 | 0,50 | | 1,29 | xxx |
| 0,60 | 0,60 | 0,50 | | 0,72 | xx |
| 0,60 | 0,40 | 0,50 | 1,84 | 1,29 | xx |
| 0,60 | 0,40 | 0,50 | | 0,83 | x |
| 0,60 | 0,20 | 0,50 | 1,84 | 1,29 | x |
| 0,60 | 0,80 | 0,45 | 1,29 | 0,72 | xx |
| 0,60 | 0,60 | 0,45 | 1,84 | 0,83 | xx |
| 0,60 | 0,40 | 0,45 | | 1,84 | xx |
| 0,60 | 0,40 | 0,45 | 1,29 | 0,72 | x |
| 0,60 | 0,40 | 0,45 | 1,84 | 1,29 | xx |
| 0,60 | 0,80 | 0,40 | 1,84 | 0,72 | xx |
| 0,60 | 0,60 | 0,40 | 1,84 | 1,29 | xx |
| 0,60 | 0,40 | 0,40 | | 1,84 | xx |
| 0,60 | 0,40 | 0,40 | | 1,29 | x |
| 0,60 | 0,20 | 0,40 | 1,84 | 1,29 | x |
| 0,60 | 0,80 | 0,33 | | 1,84 | xx |
| 0,60 | 0,80 | 0,33 | 1,29 | 0,83 | x |
| 0,60 | 0,60 | 0,33 | | 1,84 | xx |
| 0,60 | 0,60 | 0,33 | | 1,29 | x |
| 0,60 | 0,40 | 0,33 | 1,84 | 1,29 | x |
| 0,60 | 0,20 | 0,33 | | 1,84 | x |

E. = Einzelwert

Tabelle 2

| R_a (m²K)/W | Absorpt. a | g-Wert g | R_i (m²K)/W Max | Min/E. | Bewertung |
|---|---|---|---|---|---|
| 0,72 | 0,40 | 0,70 | | 0,87 | xxx |
| 0,72 | 0,20 | 0,70 | 1,84 | 0,61 | xxx |
| 0,72 | 0,40 | 0,60 | | 0,71 | xxx |
| 0,72 | 0,20 | 0,60 | 1,84 | 0,71 | xx |
| 0,72 | 0,80 | 0,50 | | 0,82 | xxx |
| 0,72 | 0,60 | 0,50 | | 0,71 | xxx |
| 0,72 | 0,40 | 0,50 | 1,28 | 0,71 | xxx |
| 0,72 | 0,20 | 0,50 | 1,84 | 0,71 | xx |
| 0,72 | 0,80 | 0,40 | 1,78 | 0,71 | xxx |
| 0,72 | 0,60 | 0,40 | 1,84 | 1,28 | xxx |
| 0,72 | 0,60 | 0,40 | | 0,71 | xx |
| 0,72 | 0,40 | 0,40 | 1,84 | 0,71 | xx |
| 0,72 | 0,20 | 0,40 | 1,84 | 1,28 | xx |
| 0,72 | 0,20 | 0,40 | | 0,71 | x |
| 0,72 | 0,80 | 0,30 | 1,84 | 1,28 | xx |
| 0,72 | 0,80 | 0,30 | | 0,71 | x |
| 0,72 | 0,60 | 0,30 | 1,84 | 1,28 | xx |
| 0,72 | 0,40 | 0,30 | 1,84 | 1,28 | xx |
| 0,72 | 0,40 | 0,30 | 1,28 | 0,71 | x |
| 0,72 | 0,20 | 0,30 | 1,84 | 1,28 | x |
| 0,72 | 0,80 | 0,20 | 1,84 | 1,28 | x |
| 0,72 | 0,60 | 0,20 | 1,84 | 1,28 | x |
| 0,72 | 0,40 | 0,20 | 1,84 | 1,28 | x |
| 0,72 | 0,20 | 0,20 | | 1,84 | x |
| 0,82 | 0,40 | 0,70 | | 0,77 | xxx |
| 0,82 | 0,20 | 0,70 | 1,68 | 0,65 | xxx |
| 0,82 | 0,40 | 0,60 | | 0,72 | xxx |
| 0,82 | 0,20 | 0,60 | 1,81 | 0,65 | xxx |
| 0,82 | 0,80 | 0,50 | | 0,72 | xxx |
| 0,82 | 0,60 | 0,50 | | 0,72 | xxx |
| 0,82 | 0,40 | 0,50 | 1,22 | 0,65 | xxx |
| 0,82 | 0,20 | 0,50 | 1,81 | 0,65 | xx |
| 0,82 | 0,80 | 0,40 | 1,22 | 0,65 | xxx |
| 0,82 | 0,60 | 0,40 | 1,68 | 0,65 | xxx |
| 0,82 | 0,40 | 0,40 | | 0,65 | xx |
| 0,82 | 0,20 | 0,40 | 1,81 | 1,22 | xx |
| 0,82 | 0,20 | 0,40 | 0,65 | 0,36 | x |
| 0,82 | 0,80 | 0,30 | 1,81 | 1,22 | xx |
| 0,82 | 0,80 | 0,30 | | 0,65 | x |
| 0,82 | 0,60 | 0,30 | 1,81 | 1,22 | xx |
| 0,82 | 0,60 | 0,30 | | 0,65 | x |
| 0,82 | 0,40 | 0,30 | | 1,81 | xx |
| 0,82 | 0,40 | 0,30 | 1,22 | 0,65 | x |
| 0,82 | 0,20 | 0,30 | | 1,81 | xx |
| 0,82 | 0,20 | 0,30 | 1,22 | 0,65 | x |
| 0,82 | 0,80 | 0,20 | 1,81 | 1,22 | x |
| 0,82 | 0,60 | 0,20 | 1,81 | 1,22 | x |
| 0,82 | 0,40 | 0,20 | 1,81 | 1,22 | x |
| 0,82 | 0,20 | 0,20 | 1,81 | 1,22 | x |

| R_a (m²K)/W | Absorpt. a | g-Wert g | R_i (m²K)/W Max | Min/E. | Bewertung |
|---|---|---|---|---|---|
| 0,97 | 0,20 | 0,47 | 1,03 | 0,85 | xxx |
| 0,97 | 0,60 | 0,40 | | 0,95 | xxx |
| 0,97 | 0,40 | 0,40 | | 0,72 | xxx |
| 0,97 | 0,20 | 0,40 | 1,30 | 0,72 | xxx |
| 0,97 | 0,80 | 0,36 | | 0,95 | xxx |
| 0,97 | 0,60 | 0,36 | | 0,72 | xxx |
| 0,97 | 0,40 | 0,36 | 1,25 | 0,72 | xxx |
| 0,97 | 0,20 | 0,36 | 1,53 | 0,72 | xxx |
| 0,97 | 0,80 | 0,30 | 1,30 | 0,72 | xxx |
| 0,97 | 0,60 | 0,30 | 1,30 | 0,72 | xxx |
| 0,97 | 0,40 | 0,30 | 1,89 | 0,72 | xxx |
| 0,97 | 0,20 | 0,30 | 1,89 | 0,42 | xx |
| 0,97 | 0,80 | 0,20 | 1,89 | 1,30 | xx |
| 0,97 | 0,80 | 0,20 | 0,72 | 0,13 | x |
| 0,97 | 0,60 | 0,20 | 1,89 | 1,30 | xx |
| 0,97 | 0,60 | 0,20 | 0,72 | 0,13 | x |
| 0,97 | 0,40 | 0,20 | 1,89 | 1,30 | xx |
| 0,97 | 0,40 | 0,20 | 0,72 | 0,13 | x |
| 0,97 | 0,20 | 0,20 | | 1,89 | xx |
| 0,97 | 0,20 | 0,20 | 1,30 | 0,13 | x |

E. = Einzelwert

5. Außenwandaufbau nach einem der Ansprüche 3 oder 4, dadurch gekennzeichnet, daß bei der gegenseitigen Abstimmung der Größen $R_a$, $R_i$, alpha und alpha*g der zu erwartende höchstmögliche Wert $q_{smax}$ der Sonnenein-

strahlung für diejenige Himmelsrichtung angesetzt wird, die der Richtungsorientierung des Außenwandaufbaus am Gebäude entspricht.

6. Außenwandaufbau nach einem der Ansprüche 1 bis 5, dadurch gekennzeichnet, daß die farbliche und/oder strukturelle Gestaltung durch eine Beschichtung der Grenzfläche (6) gebildet ist.

7. Außenwandaufbau nach einem der Ansprüche 1 bis 5, dadurch gekennzeichnet, daß die farbliche und/oder strukturelle Gestaltung durch eine Oberflächenveredelung der Grenzfläche (6) gebildet ist.

8. Außenwandaufbau nach einem der Ansprüche 1 bis 7, dadurch gekennzeichnet, daß die Grenzfläche (6) auf ihrer der äußeren Wärmedämmschicht (5) zugekehrten Oberfläche ein im wesentlichen flächenhaftes Gebilde (7) als Träger der farblichen und/oder strukturellen Gestaltung aufweist.

9. Außenwandaufbau nach einem der Ansprüche 1 bis 8, dadurch gekennzeichnet, daß die farbliche Gestaltung von monochromen oder polychromen Farbfeldern oder -bereichen gebildet ist.

10. Außenwandaufbau nach einem der Ansprüche 1 bis 9, dadurch gekennzeichnet, daß die strukturelle Gestaltung durch eine reliefartig geformte Oberfläche gebildet ist.

11. Außenwandaufbau nach einem der Ansprüche 1 bis 10, dadurch gekennzeichnet, daß die außenseitige Wandschale (1) von einlagigem Glas oder von mehrschichtigem Isolierglas unterschiedlichen Aufbaus gebildet ist.

Fig. 1

Fig. 2

Europäisches
Patentamt

**EUROPÄISCHER RECHERCHENBERICHT**

Nummer der Anmeldung

EP 97 11 5986

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 473 859 A (SEIDEL)<br>* Spalte 5, Zeile 6 - Spalte 6, Zeile 40; Abbildungen 1,3 *<br>--- | 1 | F24J2/00 |
| A | DE 31 20 794 A (ROSENDAHL)<br>* Seite 7, Zeile 22 - Seite 8, Zeile 6; Abbildungen 3,4 *<br>--- | 1 | |
| A | EP 0 626 545 A (FRAUNHOFER-GESELLSCHAFT ZUR FÖRDERUNG DER ANGEWANDTEN FORSCHUNG E.V. )<br>* Spalte 1, Zeile 24 - Spalte 2, Zeile 34; Abbildung 1 *<br>--- | 1 | |
| D,A | WO 95 10741 A (NORSK HYDRO A.S.)<br>* das ganze Dokument *<br>--- | 1-11 | |
| A | PATENT ABSTRACTS OF JAPAN<br>vol. 006, no. 216 (M-168), 29.Oktober 1982<br>& JP 57 122244 A (HITACHI SEISAKUSHO KK), 30.Juli 1982,<br>* Zusammenfassung *<br>--- | 1,2 | RECHERCHIERTE SACHGEBIETE (Int.Cl.6)<br><br>F24J |
| P,A | EP 0 736 736 A (NORSK HYDRO A.S.)<br>--- | | |
| P,A | EP 0 764 820 A (NORSK HYDRO A.S.)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 6.Februar 1998 | Beltzung, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)